# EUROPEAN PATENT APPLICATION

(11) **EP 4 478 724 A1**
(43) Date of publication of application: **18.12.2024**
(21) Application number: 22955796.2
(22) Date of filing: 16.08.2022
(51) Int. Cl.: H04N 21/443, H04N 21/426, H04N 5/64

(54) **BATTERY-EMBEDDED TV INSERTABLE INTO CASE AND METHOD FOR CONTROLLING SAME**

(71) Applicant: LG Electronics Inc., Yeongdeungpo-gu Seoul 07336 (KR)
(72) Inventor: LEE, Donghee, Seoul 06772 (KR); PARK, Taejin, Seoul 06772 (KR); HWANG, Sunho, Seoul 06772 (KR)
(74) Representative: Frenkel, Matthias Alexander
(86) International application number: PCT/KR2022/012188
(87) International publication number: WO 2024/038919

(57) **Abstract**

Provided is a method of controlling a battery embedded TV insertable in a case, the method including outputting video data through a screen of the battery embedded TV or audio data through a speaker of the battery embedded TV, stopping outputting at least one of the video data or the audio data based on detecting by a first sensor that the battery embedded TV is inserted in the case, and changing a power of the battery embedded TV into an OFF state based on detecting by a second sensor that a motion change of the case is detected below a predetermined level.

## Description

### TECHNICAL FIELD

The present disclosure relates to a multimedia device, and more particularly, to a movable TV (television) through a combination with various means of transportation.

### BACKGROUND ART

Recently, a new form factor has been discussed in multimedia devices such as mobile phones and TVs. The form factor refers to a structured form of a product.

As form factor innovation is being highlighted in the display industry due to increased mobility of consumers, convergence between devices, and rapid progress in smartization, user needs for form factors that can be used freely and conveniently regardless of usage conditions instead of the typical form factor customized for a specific usage condition in the past are increasing.

For one example, vertical TVs are expanding, breaking away from the stereotype of watching TV horizontally. Vertical TVs are products that allow you to change the direction of your screen by reflecting the characteristics of the MZ generation, who are accustomed to enjoying contents on mobile devices. It is convenient to view images of SNS and shopping sites and read comments at the same time as watching videos. In particular, vertical TVs become more advantageous when linked with smartphones through Near Field Communication (NFC) based mirroring functions. In watching a regular TV or movie, the vertical TV may be switched to a horizontal TV.

For another example, both a rollable TV and a foldable smartphone are similar in using a 'flexible display'. The flexible display literally refers to a flexible electronic device. In order to be flexible, it should be thin in the first place. A substrate that receives information and converts it into light should be thin and flexible, so that performance lasts long without damage.

Being flexible means that even if an impact is applied, it should not be significantly affected. While a flexible display is bent or folded, a joint continues to be under pressure. It is necessary to have a property of deforming with ease against applied pressure while being excellent in durability to prevent the inside thereof from being damaged by such a pressure.

A flexible display is e implemented based on an OLED, for example. The OLED is a display that uses organic light-emitting materials. Organic materials are relatively more flexible than inorganic materials such as metal. Furthermore, OLED is more competitive than other displays because a substrate of the OLED is thin. In the case of an LCD substrate that has been used in the past, there is a limit to reducing the thickness because liquid crystal and glass are separately required.

Finally, as a new form factor for TVs, demand for TVs that may be easily moved indoors and outdoors is increasing. In particular, due to the recent coronavirus epidemic, the time users stay at home is increasing, and demand for second TVs is increasing. In addition, due to the increase in the number of people who go out to play, such as camping outside, there is a demand for a new form factor TV that may be easily carried and moved.

### DISCLOSURE

### TECHNICAL TASKS

One technical task of the present disclosure is to propose a TV having a new type of form factor.

Another technical task of the present disclosure is to provide a TV that may be easily moved indoors and outdoors.

Further technical task of the present disclosure is to provide a process for maximizing efficiency of a battery included in a movable TV.

### TECHNICAL SOLUTIONS

In one technical aspect of the present disclosure, provided is a method of controlling a battery embedded TV insertable in a case, the method including outputting video data through a screen of the battery embedded TV or audio data through a speaker of the battery embedded TV, stopping outputting at least one of the video data or the audio data based on detecting by a first sensor that the battery embedded TV is inserted in the case, and changing a power of the battery embedded TV into an OFF state based on detecting by a second sensor that a motion change of the case is detected below a predetermined level.

The first sensor may include at least one sensor for detecting whether the case is open or closed.

The second sensor may include at least one sensor for detecting whether the case moves.

The method may further include activating a timer from a moment of detecting by the first sensor that the battery embedded TV is inserted in the case and that the case is closed.

The method may further include changing the second sensor into an active state from an end timing point of a preset first period Tisince the moment of detecting that the battery embedded TV is inserted in the case and that the case is closed.

The method may further include switching to a Quick Start Mode (QSM) based on detecting by the second sensor that the motion change of the case is below the predetermined level.

The method may further include disconnecting the TV and the battery from each other based on that a preset second period T2 has elapsed since a timing point of switching to the QSM.

In another technical aspect of the present disclosure, provided is a battery embedded TV insertable in a case, the battery embedded TV including a tuner receiving a broadcast signal, a screen outputting video data included in the broadcast signal, a speaker outputting audio data included in the broadcast signal, a first sensor sensing whether the case is open or closed, a second sensor sensing a motion change of the case, and a controller.

The controller stops outputting at least one of the video data or the audio data based on detecting by the first sensor that the battery embedded TV is inserted in the case.

And, the controller changes a power of the battery embedded TV into an OFF state based on detecting by the second sensor that a motion change of the case is detected below a predetermined level.

### ADVANTAGEOUS EFFECTS

According to one embodiment of the present disclosure, a TV having a new type of form factor is presented.

According to another embodiment of the present disclosure, provided is a TV that may be easily moved indoors and outdoors.

In addition, according to further embodiment of the present disclosure, there is a technical effect of providing a process for maximizing efficiency of a battery included in a movable TV.

Further scope of applicability of the present disclosure will become apparent from the detailed description given hereinafter.

However, it should be understood that the detailed description and specific examples, while indicating preferred embodiments of the disclosure, are given by illustration only, since various changes and modifications within the spirit and scope of the disclosure will become apparent to those skilled in the art from this detailed description.

### DESCRIPTION OF DRAWINGS

FIGS. 1 to 11 are diagrams for illustrating a display device according to an embodiment of the present disclosure.
FIG. 12 is a block diagram for illustrating each component of a display device according to an embodiment of the present disclosure.
FIG. 13 is a diagram illustrating a display device according to one embodiment of the present disclosure.
FIG. 14 is a diagram illustrating an example of utilizing a display device according to one embodiment of the present disclosure.
FIG. 15 is another diagram illustrating a utilization example of a display device according to one embodiment of the present disclosure.
FIG. 16 is a diagram illustrating a front surface and a side surface of a display device according to one embodiment of the present disclosure.
FIG. 17 is a diagram illustrating a state in which a case of a movable TV is opened or closed according to one embodiment of the present disclosure.
FIG. 18 s a diagram illustrating a process of differentially controlling a plurality of sensors according to a timeline.
FIG. 19 is a block diagram illustrating main components of a movable TV according to one embodiment of the present disclosure.
FIG. 20 s a diagram illustrating specific sensors included in a first sensor and a second sensor illustrated in FIG. 19.
And, FIG. 21 is a flowchart illustrating a method of controlling a movable TV according to one embodiment of the present disclosure.

### BEST MODE

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

Direction indications of up U, down D, left Le, right Ri, front F, and rear R shown in the drawings are only for convenience of description, and thus, the technical idea disclosed herein is not limited.

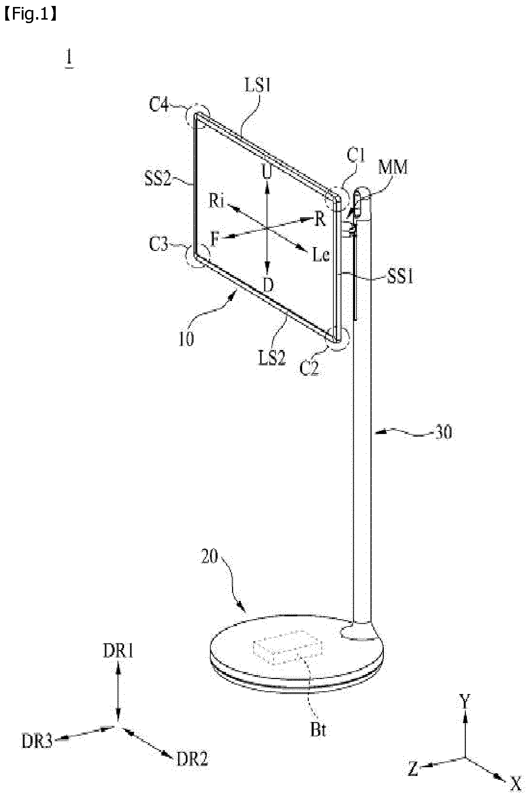

FIGS. 1 to 11 are diagrams for illustrating a display device according to an embodiment of the present disclosure.

Referring to FIG. 1, a display device 1 may include a head 10. The head 10 may display an image. The head 10 may be referred to as a display 10 or a display unit 10.

The head 10 may include a first long side LS1, a second long side LS2 opposite to the first long side LS1, a first short side SS1 adjacent to the first long side LS1 and the second long side LS2, and a second short side SS2 opposite to the first short side SS1. Although it is shown and described that a length of the first and second long sides LS1 and LS2 is greater than a length of the first and second short sides SS1 and SS2 for convenience of illustration, the length of the first and second long sides LS1 and LS2 may be approximately equal to the length of the first and second short sides SS1 and SS2.

A direction parallel to the short sides SS1 and SS2 of the head 10 may be referred to as a first direction DR1 or a vertical direction. A direction parallel to the long sides LS1 and LS2 of the head 10 may be referred to as a second direction DR2 or a left and right direction. A direction perpendicular to the long sides LS1 and LS2 and the short sides SS1 and SS2 of the head 10 may be referred to as a third direction DR3 or a front and rear direction.

A side on which the head 10 displays the image may be referred to as the front side F and z, and a side opposite thereto may be referred to as the rear side R. A side of the first short side SS1 may be referred to as the left side Le and x. A side of the second short side SS2 may be referred to as the right side Ri. A side of the first long side LS1 may be referred to as the upper side U and y. A side of the second long side LS2 may be referred to as the lower side D.

The first long side LS1, the second long side LS2, the first short side SS1, and the second short side SS2 may be referred to as edges of the head 10. In addition, a point where two of the first long side LS1, the second long side LS2, the first short side SS1, and the second short side SS2 meet each other may be referred to as a corner.

A point where the first short side SS1 and the first long side LS1 meet each other may be a first corner C1. A point where the first short side SS1 and the second long side LS2 meet may be a second corner C2.

A point where the second short side SS2 and the second long side LS2 meet each other may be a third corner C3. A point where the second short side SS2 and the first long side LS1 meet each other may be a fourth corner C4.

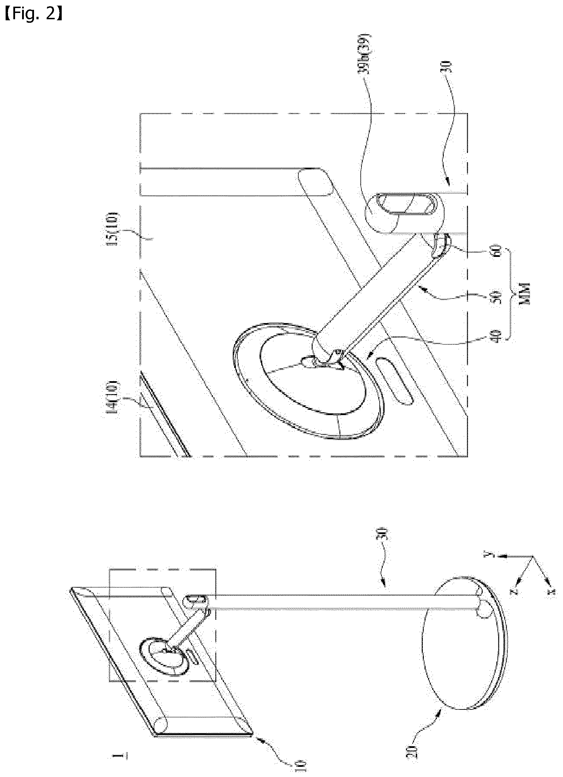

Referring to FIGS. 1 and 2, the display device 1 may include a base 20, a pole 30, and a motion module MM.

The base 20 may have a flat cylinder shape as a whole. The base 20 may be disposed on the ground.

The pole 30 may extend long in the vertical direction. A lower end of the pole 30 may be coupled onto the base 20. The pole 30 may be adjacent to a circumference of a top surface of the base 20. A handle 39 may be coupled to an upper end of the pole 30. The pole 30 and the aforementioned base 20 may be collectively referred to as a stand.

The motion module MM may extend in a direction intersecting the pole 30. One side of the motion module MM may be coupled to a rear side of the head 10. The other side of the motion module MM may be adjacent to the upper end of the pole 30 and may be coupled to the pole 30. An articulating connector 40 may be coupled to the rear side of the head 10, an elevating module 60 may be coupled to the pole 30, and an arm 50 may connect the articulating connector 40 and the elevating module 60 to each other.

Accordingly, the head 10 may be supported by the motion module MM, the pole 30, and the base 20, and may be spaced upward from the ground.

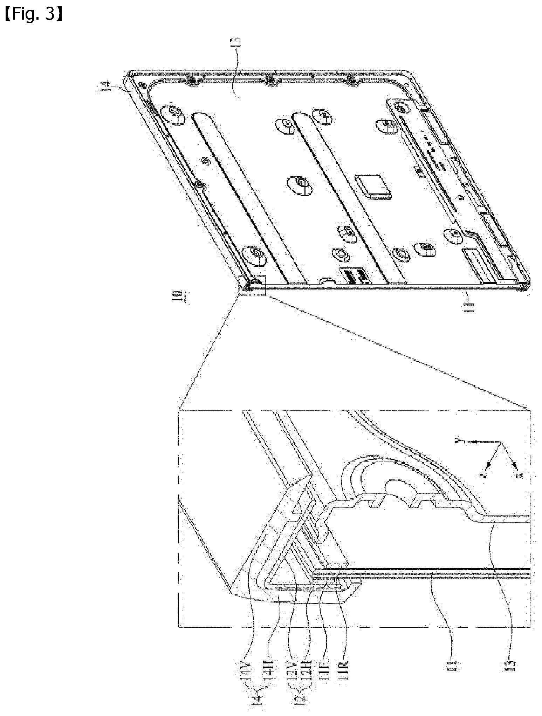

Referring to FIGS. 2 and 3, the head 10 may include a display panel 11, a middle cabinet 12, a frame 13, an end frame 14, and a back cover 15.

The display panel 11 may form a front surface of the head 10. For example, the display panel 11 may be an OLED panel, an LCD panel, or an LED panel. The display panel 11 may output the image by dividing the image into a plurality of pixels and matching color, brightness, and saturation for each pixel. The display panel 11 may be divided into an active area in which the image is displayed and an inactive area in which the image is not displayed. The display panel 11 may generate light with a color corresponding to red, green, or blue in response to a control signal.

The middle cabinet 12 may extend along a perimeter of the display panel 11. A horizontal portion 12H may be located in front of the display panel 11. A vertical portion 12V may intersect the horizontal portion 12H and may cover a side surface of the display panel 11.

For example, the middle cabinet 12 may contain a metal or plastic material. The middle cabinet 12 may be referred to as a side frame or a guide panel.

The frame 13 may be positioned at the rear of the display panel 11. Electronic components such as a printed circuit board (PCB) may be coupled to a rear surface of the frame 13. For example, the frame 13 may contain a metal material. The frame 13 may be referred to as a mount plate or a module cover.

The end frame 14 may form a perimeter of the head 10. A horizontal portion 14H may be located in front of the horizontal portion 12V of the middle cabinet 12. A vertical portion 14V may cover a side surface of the vertical portion 12V of the middle cabinet 12. For example, the end frame 14 may contain a metal or plastic material.

The back cover 15 may form a rear surface of the head 10. The back cover 15 may cover the frame 13 from the rear and may be coupled to the frame 13.

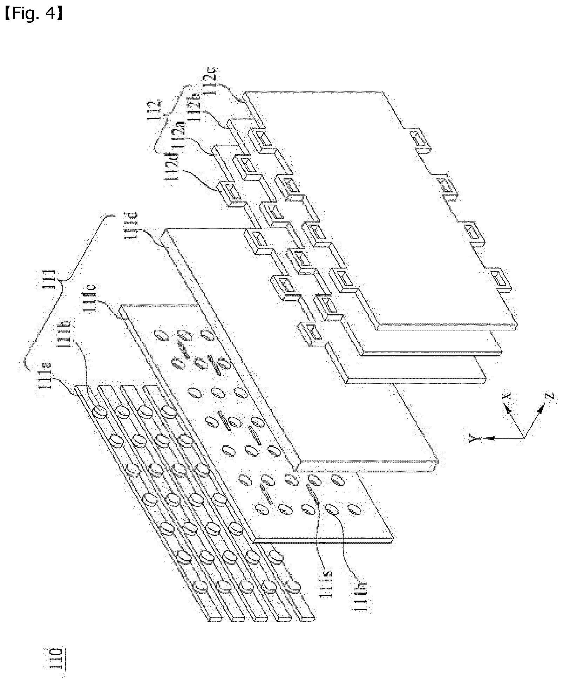

Referring to FIGS. 3 and 4, a backlight unit 110 may be positioned between the display panel 11 and the frame 13 and coupled to the frame 13. In this regard, the display panel 11 may be referred to as the LCD panel. The backlight unit 110 may include an optical layer 111 and an optical sheet 112. The optical layer 111 may include a substrate 111a, at least one light source 111b, a reflective sheet 111c, and a diffusion plate 111d.

The substrate 111a may be coupled to a front surface of the frame 13. The substrate 111a may have a plate shape or may be composed of a plurality of straps spaced apart from each other in the vertical direction. The at least one light source 111b may be mounted on the substrate 111a. For example, the light source 111b may include a light emitting diode (LED). An electrode pattern for connecting an adapter and the light source 111b to each other may be formed on the substrate 111a. The reflective sheet 111c may be positioned in front of the substrate 111a. The reflective sheet 111c may have a hole 111h in which the light source 111b is positioned. The diffusion plate 111d may be positioned in front of the reflective sheet 111c. A spacer 111s may support a rear surface of the diffusion plate 111d at a location between the reflective sheet 111c and the diffusion plate 111d.

The optical sheet 112 may be located in front of the diffusion plate 111d. A rear surface of the optical sheet 112 may be in close contact with the diffusion plate 111d, and a front surface of the optical sheet 112 may be in close contact with or adjacent to a rear surface of the display panel 11. The optical sheet 112 may include at least one of a diffusion sheet and a prism sheet. A coupling portion 112d may be formed at at least one edge of the optical sheet 112.

Accordingly, light from the light source 111b may be provided to the display panel 11 through the diffusion plate 111d and the optical sheet 112. In one example, the display panel 11 of the present disclosure may be the OLED panel that does not require the aforementioned backlight unit 110 or a different type of panel.

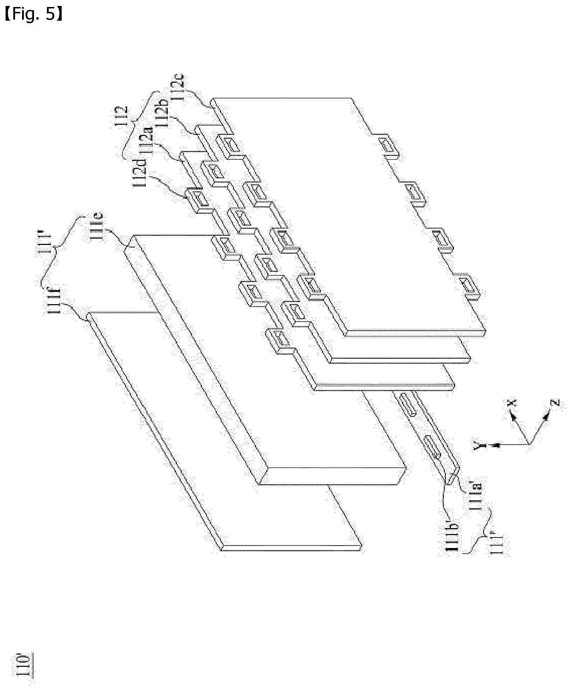

Referring to FIGS. 3 and 5, a backlight unit 110' may be located between the display panel 11 and the frame 13 and may be coupled to the frame 13. In this regard, the display panel 11 may be referred to as the LCD panel. The backlight unit 110' may include an optical layer 111' and the optical sheet 112. The optical layer 111' may include a substrate 111a', at least one light source 111b', a reflective sheet 111f, and a light guide plate 111e. The light guide plate 111e may be positioned between the frame 13 and the optical sheet 112 and may be supported by the frame 13.

The substrate 111a' may be adjacent to a perimeter of the light guide plate 111e and may be coupled to the frame 13. The at least one light source 111b' may be mounted on the substrate 111a'. For example, the light source 111b' may include a light emitting diode (LED). An electrode pattern for connecting an adapter and the light source 111b' to each other may be formed on the substrate 111a'. The reflective sheet 111f may be positioned between the frame 13 and the light guide plate 111e and may be supported by the frame 13.

Accordingly, light from the light source 111b' may be provided to the display panel 11 through the light guide plate 111e and the optical sheet 112. In one example, the display panel 11 of the present disclosure may be the OLED panel that does not require the aforementioned backlight unit 110' or another type of panel.

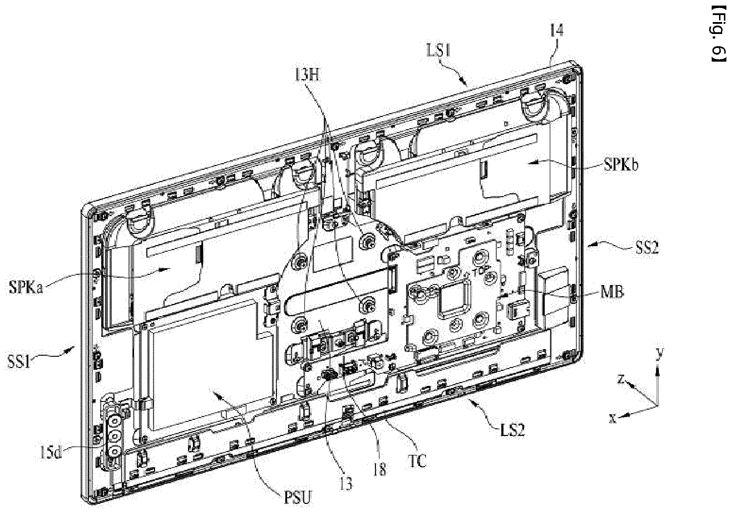

Referring to FIG. 6, the electronic components may be mounted on the rear surface of the frame 13 and may include a plurality of boards PSU, MB, and TC and speakers SPKa and SPKb.

The power supply board PSU may be located closer to the first short side SS1 than to the second short side SS2, and may be coupled to the rear surface of frame 13. The power supply board PSU may provide power to each component of the display device. For example, the power supply board PSU may provide the power to the light sources 111b and 111b' of the backlight units 110 and 110' (see FIGS. 4 and 5). The power supply board PSU may be referred to as an LED driver.

The main board MB may be located closer to the second short side SS2 than to the first short side SS1, and may be coupled to the rear surface of the frame 13. The main board MB may control the display device.

The timing controller board TC may be located downwardly of the power supply board PSU and the main board MB, and may be coupled to the rear surface of the frame 13. The timing controller board TC may be electrically connected to the display panel 11 (see FIG. 3) via a cable (not shown) and may provide an image signal to the display panel 11.

The speakers SPKa and SPKb may be located upwardly of the plurality of boards PSU, MB, and TC, and may be coupled to the rear surface of the frame 13. For example, the left speaker SPKa may be located closer to the first short side SS1 than to the second short side SS2, and may provide sound to the side. For example, the right speaker SPKb may be located closer to the second short side SS2 than to the first short side SS1, and may provide sound to the side.

A locking unit 18 may be coupled to the rear surface of the frame 13. The locking unit 18 may be located downwardly of a center of the frame 13.

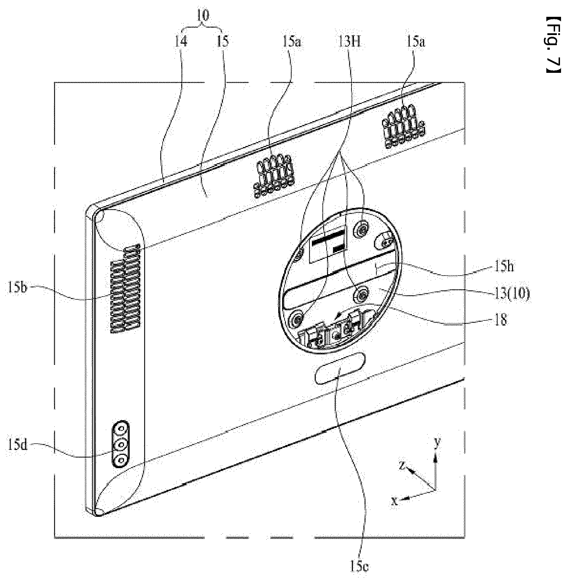

Referring to FIG. 7, the back cover 15 may cover the frame 13 from the rear and may be coupled to the frame 13. Locations of speaker holes 15a and 15b defined in the back cover 15 may correspond to the locations of the speakers SPKa and SPKb (see FIG. 6) mounted on the frame 13.

A fixing member 13H may protrude rearwards from the rear surface of the frame 13. The fixing member 13H may be a fem nut. The fixing member 13H and the locking unit 18 may be exposed to the outside via a hole 15h defined at a center of the back cover 15.

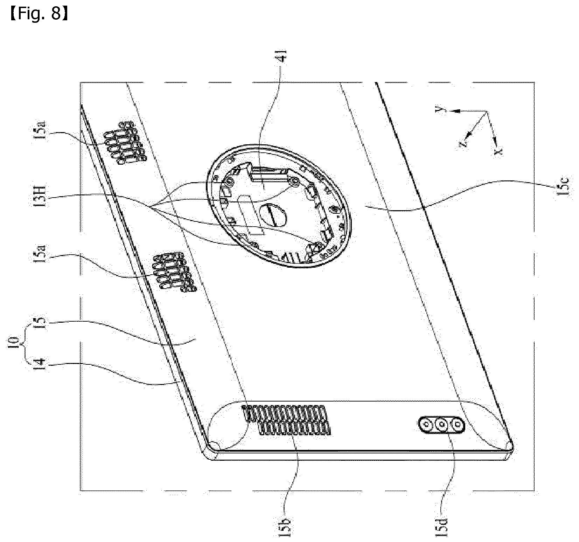

Referring to FIGS. 7 and 8, a fixing plate 41 may have a circular plate shape corresponding to the hole 15h of the back cover 15.

A fixing hole 41H may be defined in the fixing plate 41 and may be aligned with the fixing member 13H. A fastening member (not shown) such as a screw may be fastened to the fixing member 13H via the fixing hole 41H. Accordingly, the fixing plate 41 may be coupled to the frame 13.

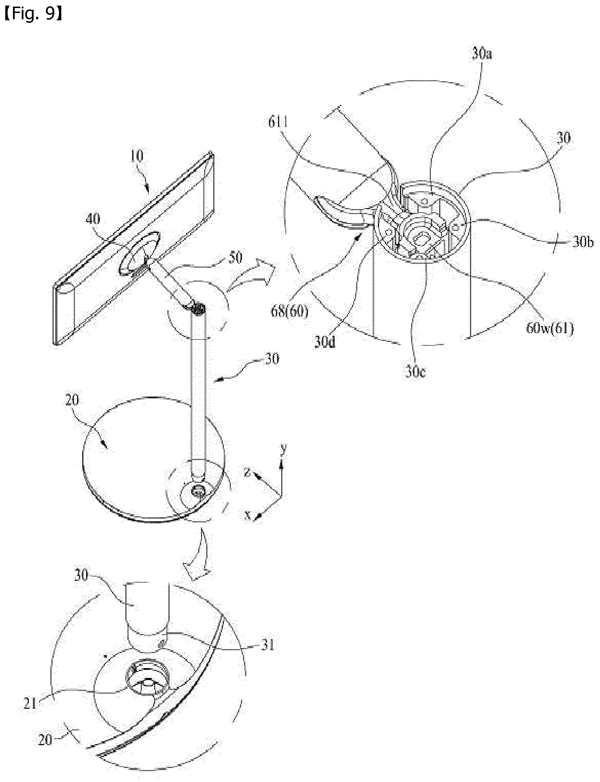

Referring to FIG. 9, the arm 50 may extend in a direction intersecting the head 10 and the pole 30. The arm 50 may connect the articulated connector 40 and the elevating module 60 to each other. A second pivoting unit 68 and a vertical member 61 of the elevating module 60 may be connected to each other via a second connector 611. The second connector 611 may pass through the pole 30.

The vertical portion member 61 may extend in a longitudinal direction of the pole 30. The vertical portion material 61 may be accommodated inside the pole 30.

The pole 30 may extend in the vertical direction and may surround the vertical material 61. A plurality of ribs 30a, 30b, 30c, and 30d may protrude toward the vertical material 61 from an inner circumferential surface of the pole 30, and may be spaced apart from each other in a circumferential direction of the pole 30. The first rib 30a, the second rib 30b, the third rib 30c, and the fourth rib 30d may be positioned at vertices of an arbitrary square inside the pole 30.

In addition, an inserted portion 31 of the pole 30 may be inserted into and coupled to a port 21 defined in a top surface of the base 20.

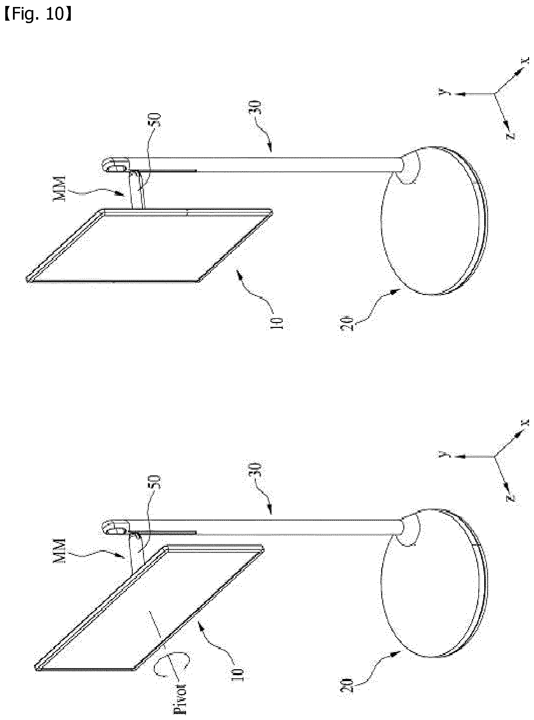

Referring to FIG. 10, the head 10 may be spaced upward from the base 20. A user may pivot the head 10. A pivot axis may pass through a center of head 10 and may be orthogonal to the head 10. Referring to a left drawing in FIG. 10, the head 10 may be placed in a landscape mode. Referring to a right drawing in FIG. 10, the head 10 may be placed in a portrait mode.

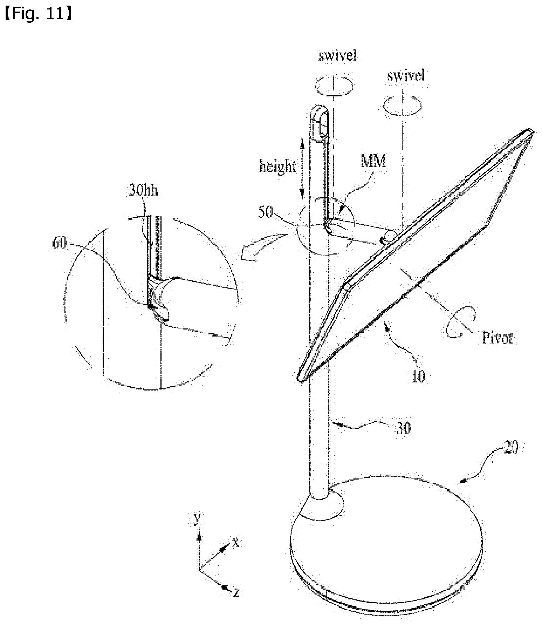

Referring to FIG. 11, the user may tilt the head 10. A tilt axis is located at the rear of the center of the head 10 and may be a horizontal axis parallel to the head 10. The user may swivel the head 10. A first swivel axis may be a vertical axis adjacent to one end of the arm 50. A second swivel axis may be a vertical axis adjacent to the other end of the arm 50. The user may ascend or descend the head 10 from the pole 30.

The aforementioned pivoting, tilting, swiveling, and elevating operations of the head 10 may be implemented independently of each other. For example, the head 10 may be pivoted within a range from +90 degrees to -90 degrees. For example, the head 10 may be tilted within a range from +25 degrees to -25 degrees. For example, the head 10 may be swiveled within a range from +65 to -65 degrees. For example, the head 10 may be located at a vertical level in a range from 1,065 to 1,265 mm from the base 20 or the ground in the landscape mode.

Referring to FIGS. 10 and 11, the base 20 may stably support various motions of the display device via the motion module MM. In addition, the base 20 may improve stability of moving of the display device via a wheel assembly 29 (see FIG. 34).

On the other hand, the display device described herein is, for example, an intelligent display device in which a computer support function is added to a broadcast reception function. The intelligent display device may have a more user-friendly interface such as a handwriting-type input device, a touch screen, or a space remote control as an Internet function is added while being faithful to the broadcast reception function. In addition, the display device may be connected to Internet and a computer as a wired or wireless Internet function is supported, thereby performing functions such as an e-mail, web browsing, banking, or a game. A standardized universal OS may be used for such various functions.

Therefore, because various applications may be freely added to or deleted from the display device described in the present disclosure, for example, a general-purpose OS kernel, various user-friendly functions may be performed. More specifically, the display device may be, for example, a network TV, an HBBTV, a smart TV, and the like, and may also be applied to a smart phone in some cases.

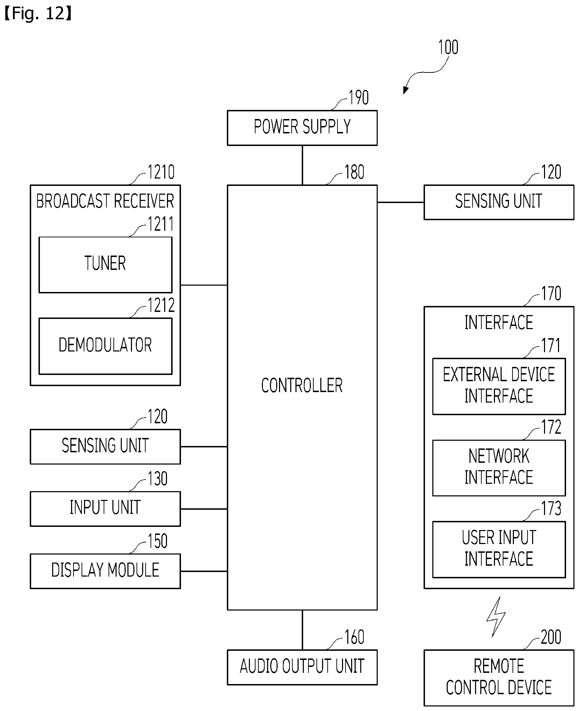

FIG. 12 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 12 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Blu-ray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 12 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

The new form factor of the TV shown in FIGs. 1 to 12 has an advantage in being easily movable mainly indoors.

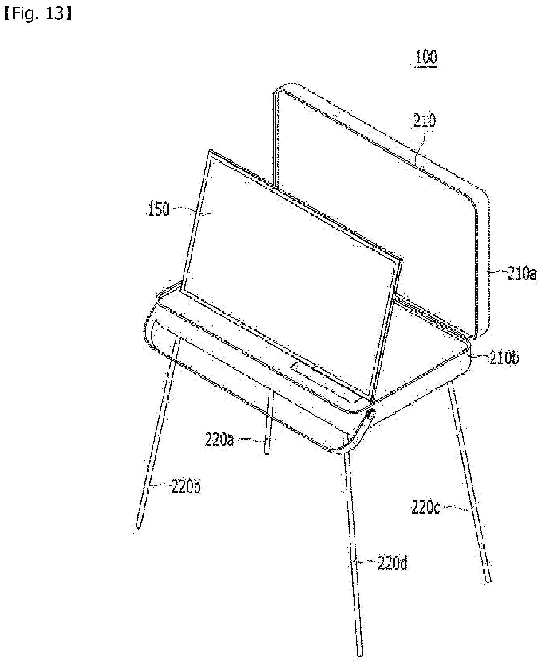

On the other hand, a new form factor of a TV suitable for moving outdoors to a long distance, an outdoor camping site, and the like will be described in more detail below with reference to FIGs. 13 to 16. Meanwhile, designing some or all of the components illustrated in FIG. 12 to be included in a device illustrated in FIGs. 13 to 16 also falls within another scope of the present disclosure.

FIG. 13 is a diagram illustrating a display device according to one embodiment of the present disclosure. Hereinafter, a description redundant with the above description will be omitted.

Referring to FIG. 13, a display device 100 has a form in which a display module 150 is accommodated in a housing 210. In this case, the housing 210 includes an upper case 210a and a lower case 210b, and may be formed in a structure in which the upper case 210a and the lower case 210b are open/closed.

In one embodiment, an audio output unit 160 may be included in the upper case 210a of the display device 100. A main board that is a controller 180, a power board, a power supply unit 190, a battery, an interface unit 170, a sensing unit 120, an input unit 130 (local keys included), and the like may be accommodated in the lower case 210b. Here, the interface unit 170 may include a Wi-Fi module, a Bluetooth module, an NFC module, and the like for communication with external devices, and the sensing unit 120 may include an illuminance sensor and an IR sensor.

In one embodiment, the display module 150 may include a DC-DC board, a sensor, and a Low Voltage Differential Signaling (LVDS) conversion board.

In addition, in one embodiment, the display device 100 may further include four detachable legs 220a, 220b, 220c, and 220d. Here, the four legs 220a, 220b, 220c, and 220d may be attached to the lower case 210b to enable the display device 100 to be spaced apart from a floor.

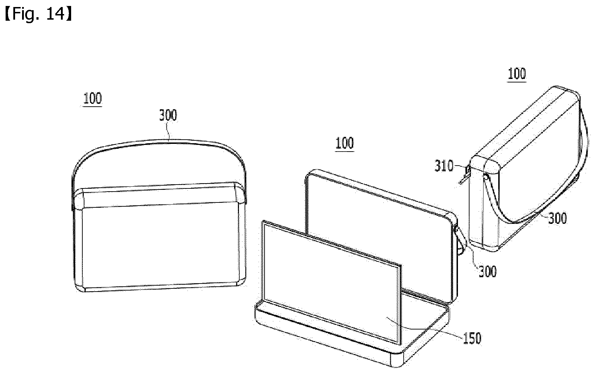

FIG. 14 is a diagram illustrating an example of utilizing a display device according to one embodiment of the present disclosure. Hereinafter, a description redundant with the above description will be omitted.

In the embodiment of FIG. 14, the display device 100 shows an example of utilization in which legs are not included. Referring to FIG. 14, the display device 100 has a structure in which a display module is mounted in an upper case and a lower case as described above, and may be transformed into a structure that may be carried like a bag when the upper case and the lower case are closed.

In one embodiment, the display device 100 may include a handle 300 on the upper case or the lower case. Here, the handle 300 may have a structure attached to left and right sides of the upper case or the lower case so that a user can hold or carry a housing in which the upper case and the lower case are closed. In this case, the handle 300 may be made of a material that is easy for the user to hold, such as leather or plastic.

That is, the display device 100 includes the handle 300 while the upper case or the lower case is closed, so that the user may easily carry and move the display device 100.

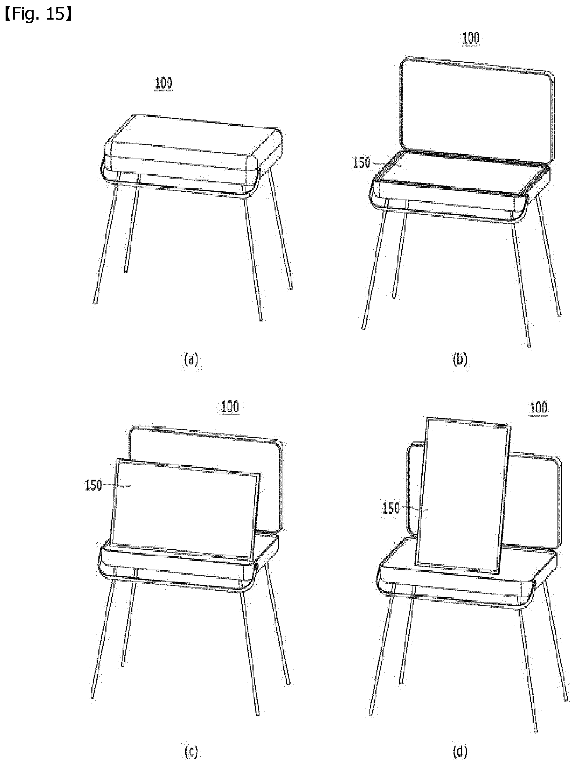

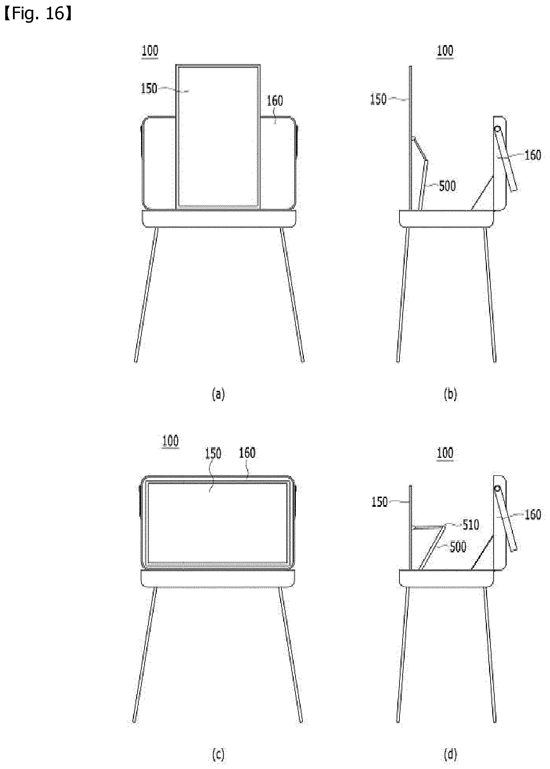

In addition, if necessary, the user may place the lower case on the floor and open the upper case to use the mounted display module 150. This will be described in detail in FIG. 15 and FIG. 16.

In addition, in one embodiment, the display device 100 may further include a storage space 310 on a side of the lower case. Here, various modules described above with reference to FIG. 12 may be included in the storage space 310. Also, the storage space 310 may include a space in which a touch-pen, a wireless earphone, and the like may be accommodated.

FIG. 15 is another diagram illustrating a utilization example of a display device according to one embodiment of the present disclosure. Hereinafter, a description redundant with the above description will be omitted.

In one embodiment of the present disclosure, the display device 100 may include four legs. In this case, the four legs may be attached to the lower case to enable the display device 100 to be spaced apart from the floor.

Accordingly, a user may not only use the display device 100 while moving it, but also use it in a fixed position spaced apart from the floor.

FIGs. 15 (a) to 15 (d) show an example of using the display device 100 in a fixed position in a manner of attaching the legs to the display device 100. In this case, FIG. 15 (a) shows a closed state of the upper case of the display device 100, and FIGs. 15 (b) to FIG. 15 (d) show opened states of the upper case.

Specifically, FIG. 15 (b) shows a state in which the display module 150 is accommodated in the lower case while the upper case is open. In other words, FIG. 15 (b) shows a state in which the display module 150 lies in the lower case while the upper case is open. Even in a state in which the display module 150 is accommodated in the lower case, the display module 150 may be activated.

In one embodiment, the display device 100 may provide an editing mode while the display module 150 is accommodated in the lower case. Here, the editing mode may include a function of adding at least one of a memo function, a drawing function, and a voice recording function to a content.

That is, when the display module 150 is mounted on the lower case, the display device 100 may determine that a user intends to view/watch a content through the display module 150.

On the other hand, when the display module 150 is accommodated in the lower case, the display device 100 may determine that the user intends to edit the content outputted to the display module 150. Accordingly, when the display module 150 is accommodated in the lower case, the display device 100 may provide a function of editing a content.

FIG. 15 (c) shows a state in which the display module 150 is horizontally mounted on the lower case while the upper case is open, and FIG. 15 (d) shows a state in which the display module 150 is vertically mounted on the lower case while the upper case is open. In this case, FIG. 15 (c) and FIG. 15 (d) show the state in which the display module 150 is erected with the lower case as a foothold.

In addition, in one embodiment, the display device 100 may automatically accommodate or mount the display module 150 in the lower case using a motor (not shown).

In more detail, when the upper case is opened, the display device 100 may automatically mount the display module 150 horizontally or vertically on the lower case.

Also, in another embodiment, when the upper case is opened, the display device 100 may first accommodate the display module 150 on the lower case. Thereafter, the display device 100 may mount the display module 150 on the lower case based on a signal of touching the display module 150, a signal inputted from a sensing unit or an input unit. For example, a user may mount the display module 150 on the lower case by pressing the display module 150 accommodated in the lower case downward. This will be described in detail with reference to FIG. 16.

FIG. 16 is a diagram illustrating a front surface and a side surface of a display device according to one embodiment of the present disclosure. Hereinafter, a description redundant with the above description will be omitted.

FIG. 16 (a) and FIG. 16 (b) show that the display module 150 is mounted vertically, and FIG. 16 (c) and FIG. 16 (d) show that the display module 150 is mounted horizontally.

FIG. 16 (a) and FIG. 16 (c) are diagrams showing a front view of the display device 100, and FIG. 16 (b) and FIG. 16 (d) are diagrams showing a side view of the display device 100.

In one embodiment, since the upper case may include the audio output unit 160, FIG. 16 (a) show that the display module 150 is mounted vertically and the upper case including the audio output unit 160 may be located at a rear end.

Referring to FIG. 16 (b), the display device 100 may further include a support member 500 to vertically mount the display module 150 to the lower case. That is, looking into a side view of the display device 100, as shown in FIG. 16 (b), the support member 500 is included in the lower case and may be designed to be folded to vertically mount the display module 150. In this case, the support member 500 may be controlled by a motor of the display device 100 and may be manually manipulated by a user's hand.

Referring to FIG. 16 (c), the display device 100 may horizontally mount the display module 150 and include the audio output unit 160 at the rear end.

Referring to FIG. 16 (d), the display device 100 may include a support member 500 to horizontally mount the display module 150 on the lower case. Here, the support member 500 may use the same support member 500 as shown in FIG. 16 (b), but a hinge 510 included in the support member 500 may be more folded to horizontally mount the display module 150.

In addition, in one embodiment, the display module 150 may be manually mounted horizontally or vertically by a user's hand. In another embodiment, the display module 150 may be mounted horizontally or vertically on the lower case under the control of the display device 100. In this case, the display device 100 may horizontally or vertically mount the display module 150 based on a user's control signal (sensed through a sensing unit or an input unit).

On the other hand, in the case of a TV according to a new form factor, since it is movable, unlike the related art TV, it should be implemented through a battery. Furthermore, unlike a mobile phone with a small display size, a TV has a relatively large screen, so there is a problem that battery consumption proceeds rapidly.

In particular, since the TV shown in FIGs. 13 to 16 is likely to be used outdoors, such as a camping site, it is a very important technology to maintain battery performance to the maximum.

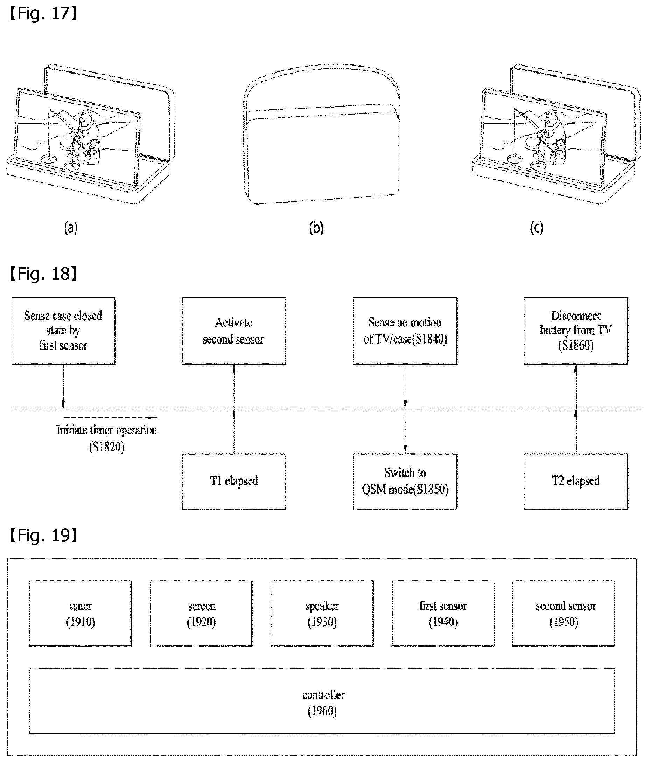

The related solution will be described in more detail with reference to FIGs. 17 to 21.

FIG. 17 illustrates a state in which a case of a movable TV is open/closed according to one embodiment of the present disclosure. For reference, by referring to FIGs. 13 to 16, supplementary analysis of FIGs. 17 to 21, which will be described below, may also be performed.

In particular, as described in FIG. 14, a movable TV may be implemented in a form factor in which a display module is mounted in an upper case and a lower case. Furthermore, while the upper case and the lower case are closed, the movable TV may be transformed into a structure that may be carried/held like a bag.

For example, as illustrated in FIG. 17 (a), when the display module is exposed while the case is open, it is determined that a user intends to normally use the TV. Therefore, a power of a battery is normally supplied to various modules (including the display module) in the TV. As described above, the battery may be located in the lower case, but may be located in another location, such as the upper case, if necessary by those skilled in the art.

Yet, if the user intends to move the TV or does not intend to use the TV anymore, the case changes to a closed state while the display module is inserted into the case, as shown in FIG. 17 (b). In this case, the power of the battery does not need to be supplied to all TV-related components.

If the user intends to move the TV simply and also intends to continue using it, the display module is exposed again with the case open, as shown in FIG. 17 (c).

In particular, in the state shown in FIG. 17 (b), a specific solution is needed to maximize the battery life of the movable TV by determining whether the user is willing to continue using the TV and distributing power differently for each situation, which will be described later with reference to FIG. 18.

FIG. 18 illustrates a process of differentially controlling a plurality of sensors according to a timeline.

As described above, unlike the related art, it is assumed that a movable TV according to one embodiment of the present disclosure is movable while being inserted into a case. And, unlike the related art, it is assumed that mobility is guaranteed by supplying power to the TV by a battery. Furthermore, it will be described on the assumption that the display device 100 shown in FIGS. 13 and 14 corresponds to a movable TV to be described in FIG. 18.

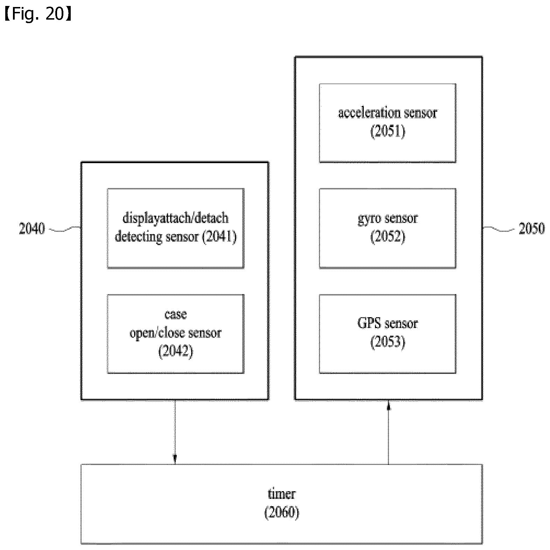

First, as shown in FIG. 18, a movable TV according to one embodiment of the present disclosure is designed to sense that a case is closed by a first sensor (S1810). The above-described first sensor will be described in more detail with reference to FIG. 20.

In order to more accurately grasp an intention of a user who has closed a TV case (e.g., whether the user intends to continue using the TV after moving the TV to another place or whether the user intends not to use the TV with the case closed anymore, etc.), a timer inside the TV is designed to operate from a timing point of the step S1810 (S1820). By estimating the user's intention, it is designed that battery power is supplied only to modules that need the battery power. Therefore, there is a technical effect that a use time of a battery embedded in the movable TV is maintained at a maximum value.

And, from the timing point of detecting the case closed state by the first sensor (S1810), it is designed to stop outputting video and audio of the TV. Accordingly, unnecessary battery consumption is minimized, and a system is recognized as turned off from the perspective of a user. Yet, in consideration of a case in which the user closes the case only for a short period of time in order to move the TV, a main system of the TV is designed to be maintained.

Therefore, from a timing point of timer operation initiation (S1820), if the first sensor detects that the case has changed to the open state again before a first period T1 elapses, a technical effect capable of quickly returning to its original state is expected.

On the other hand, from a timing point at which the first period T1 elapses from the timing point of the timer operation initiation (S1820), a second sensor in the movable TV is designed to be changed from an inactive state to an active state (S1830). The second sensor will be described in more detail below with reference to FIG. 20.

In addition, as shown in FIG. 18, there is a technical effect of minimizing unnecessary battery power consumption by sequentially activating the first and second sensors according to specific events and time without always activating them at the same time.

When no movement of the case (TV) is detected by the second sensor (S1840), the TV according to one embodiment of the present disclosure is switched to a Quick Start Mode (QSM) (S1850). Here, the Quick Start Mode (QSM) means, for example, a state in which the TV saves a current state to a memory and manages a main system in lowest power mode.

Finally, from a timing point S1860 at which a second period T2 elapses after a timing point of switching to the QSM mode (S8150), power supply of the battery is cut off. In this state, for example, the battery normally supplies power to the TV in response to a power signal received from a remote controller.

The T1 and T2 may be changed by user settings, or may be automatically changed after learning and saving it to the memory by the TV, which pertains to another scope of the present disclosure.

An embodiment of implementing the process shown in FIG. 18 in a movable TV device will be described below with reference to FIG. 19.

FIG. 19 is a block diagram illustrating main components of a movable TV according to one embodiment of the present disclosure. Supplementary analysis of FIG. 19 may also be performed with reference to FIG. 12, etc.

As described above, a TV 1900 according to one embodiment of the present disclosure is characterized in having an embedded battery to be inserted in a case and to ensure mobility.

A tuner 1910 receives a broadcast signal, and a screen 1920 outputs video data included in the broadcast signal. Then, a speaker 1930 outputs audio data included in the broadcast signal.

A first sensor 1940 is designed to sense whether the case is opened or closed, and a second sensor 1950 is designed to sense a motion change of the case. Specific sensors included in the first sensor 1940 and the second sensor 1950 will be described in more detail in FIG. 20.

When it is detected by the first sensor 1940 that the battery-embedded TV is inserted into the case (i.e., upper and lower cases are closed), a controller 1960 stops outputting video and audio data.

Furthermore, when the motion change of the case is detected below a certain level by the second sensor 1950 (i.e., when the case including the display is not moved and fixed), the controller 1960 is designed to change a power of the battery-embedded TV to an OFF state.

In addition, the controller 1960 activates a timer (not shown) from the moment when the first sensor 1940 detects that the battery-embedded TV is inserted into the case and the case is closed. The timer described above will also be described in more detail below with reference to FIG. 20.

From the moment when the battery-embedded TV is inserted into the case and the case is closed, the controller 1960 changes the second sensor 1950 to an active state from the end of a preset first period T1. The first period T1 has been described in FIG. 18, and redundant descriptions will be omitted.

When the motion change of the case is detected below a certain level by the second sensor 1950 (i.e., when there is no change in motion of the movable TV), the controller 1960 switches to a QSM mode.

In addition, when a preset second period T2 elapses since a timing point of switching to the QSM mode, the controller 1960 disconnects the TV and the battery from each other. The second period T2 has been described in FIG. 18, and redundant descriptions will be omitted.

FIG. 20 illustrates specific sensors included in the first sensor and the second sensor shown in FIG. 19.

A first sensor 2040 shown in FIG. 20 includes at least one sensor for detecting whether a case capable of packaging a movable TV is opened or closed, for example.

A display attach/detach detecting sensor 2041 included in the first sensor 2040 detects whether a display module of the movable TV is attached to the case. This is because, according to one embodiment of the present disclosure, it is possible to separate the display module from the case and use it like a tablet PC.

When the display module of the movable TV is detected to be attached to the case by the display attach/detach detecting sensor 2041 and the case is detected to be closed by a case open/close sensor 2042, a timer 2060 is designed to operate to understand user's more specific intention.

Furthermore, as described above in FIG. 18, when the first period T1 elapses, a second sensor 2050 is activated. It is possible to estimate the user's intention more clearly by the second sensor 2050. Here, the second sensor 2050 shown in FIG. 20 includes at least one sensor for detecting whether the case currently packaging the TV moves.

If it is detected that there is no movement of the movable TV by at least one of an acceleration sensor 2051, a gyro sensor 2052, and a GPS sensor 2053 included in the second sensor 2050, it is switched to a QSM mode. This is because it is determined that the possibility of a user intending to use the TV immediately is reduced.

In addition, after a second period T2 has elapsed after the QSM mode switching, there is a technical effect of preventing unnecessary power consumption by controlling battery power to be supplied no more to the TV.

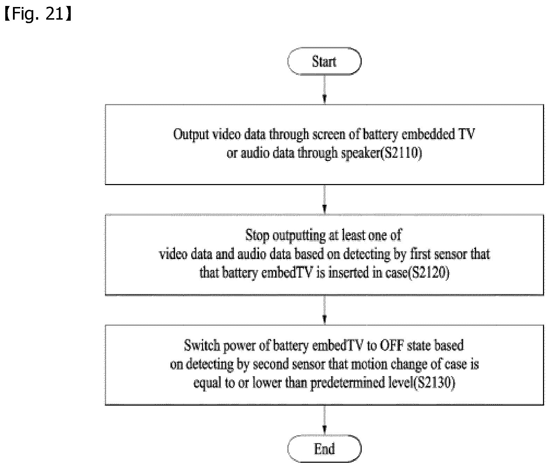

In addition, FIG. 21 is a flowchart illustrating a method of controlling a movable TV according to one embodiment of the present disclosure. Supplementary interpretation of FIG. 21 with reference to the previous drawings is also within the scope of other rights of the present disclosure.

As shown in FIG. 21, a battery-embedded TV that can be inserted into a case according to one embodiment of the present disclosure outputs audio data through speakers or video data through a screen of the battery-embedded TV (S2110).

Furthermore, when it is detected by a first sensor that the battery-embedded TV is inserted into the case, the output of at least one of the video data or the audio data is stopped (S2120).

In addition, if a motion change of the case is detected below a certain level by a second sensor (i.e., if there is no change in the position of the TV), a power of the battery-embedded TV is changed to an OFF state.

Accordingly, there is a technical effect of maintaining a battery usage time of the movable TV at a maximum value.

The present disclosure described above can be implemented as computer-readable code in a medium on which a program is recorded. Computer-readable media include all types of recording devices in which data readable by a computer system is stored.

Examples of computer-readable media include Hard Disk Drive (HDD), Solid State Disk (SSD), Silicon Disk Drive (SDD), ROM, RAM, CD-ROM, magnetic tape, floppy disk, optical data storage device, etc., as well as such media implemented in the form of carrier waves (e.g., transmission over the Internet).

In addition, the computer may include a controller. Therefore, the above detailed description of the present disclosure should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

### MODE

In Best Mode for implementing the disclosure, which is the previous table of contents, various forms for implementing the disclosure have been described above.

### INDUSTRIAL APPLICABILITY

Since the present disclosure is applicable to a movable TV, industrial applicability of the present disclosure is recognized.

## Claims

1. A method of controlling a battery embedded TV insertable in a case, the method comprising:
outputting video data through a screen of the battery embedded TV or audio data through a speaker of the battery embedded TV;
stopping outputting at least one of the video data or the audio data based on detecting by a first sensor that the battery embedded TV is inserted in the case; and
changing a power of the battery embedded TV into an OFF state based on detecting by a second sensor that a motion change of the case is detected below a predetermined level.

2. The method of claim 1, wherein the first sensor comprises at least one sensor for detecting whether the case is open or closed and wherein the second sensor comprises at least one sensor for detecting whether the case moves.

3. The method of claim 1, further comprising activating a timer from a moment of detecting by the first sensor that the battery embedded TV is inserted in the case and that the case is closed.

4. The method of claim 3, further comprising changing the second sensor into an active state from an end timing point of a preset first period Tisince the moment of detecting that the battery embedded TV is inserted in the case and that the case is closed.

5. The method of claim 4, further comprising switching to a Quick Start Mode (QSM) based on detecting by the second sensor that the motion change of the case is below the predetermined level.

6. The method of claim 5, further comprising disconnecting the TV and the battery from each other based on that a preset second period T2 has elapsed since a timing point of switching to the QSM.

7. A battery embedded TV insertable in a case, the battery embedded TV comprising:
a tuner receiving a broadcast signal;
a screen outputting video data included in the broadcast signal;
a speaker outputting audio data included in the broadcast signal;
a first sensor sensing whether the case is open or closed;
a second sensor sensing a motion change of the case; and
a controller configured to stop outputting at least one of the video data or the audio data based on detecting by the first sensor that the battery embedded TV is inserted in the case and change a power of the battery embedded TV into an OFF state based on detecting by the second sensor that a motion change of the case is detected below a predetermined level.

8. The battery embedded TV of claim 7, wherein the first sensor comprises at least one sensor for detecting whether the case is open or closed and wherein the second sensor comprises at least one sensor for detecting whether the case moves.

9. The battery embedded TV of claim 7, wherein the controller activates a timer from a moment of detecting by the first sensor that the battery embedded TV is inserted in the case and that the case is closed.

10. The battery embedded TV of claim 9, wherein the controller changes the second sensor into an active state from an end timing point of a preset first period Tisince the moment of detecting that the battery embedded TV is inserted in the case and that the case is closed.

11. The battery embedded TV of claim 10, wherein the controller switches to a Quick Start Mode (QSM) based on detecting by the second sensor that the motion change of the case is below the predetermined level.

12. The battery embedded TV of claim 11, wherein the controller disconnects the TV and the battery from each other based on that a preset second period T2 has elapsed since a timing point of switching to the QSM.
